# FASCICULE DE BREVET EUROPEEN

(11) **EP 2 923 132 B1**
(45) Date de publication et mention de la délivrance du brevet: **14.02.2018**
(21) Numéro de dépôt: 13795713.0
(22) Date de dépôt: 20.11.2013
(51) Int. Cl.: F16L 37/084, F16L 37/092

(54) **ENSEMBLE D'ÉTANCHÉITÉ POUR JONCTION TUBULAIRE ET JONCTION TUBULAIRE CORRESPONDANTE**
DICHTUNGSANORDNUNG FÜR EINE ROHRVERBINDUNG UND ZUGEHÖRIGE ROHRFÖRMIGE VERBINDUNG
SEALING ASSEMBLY FOR A TUBULAR JOINT, AND CORRESPONDING TUBULAR JOINT

(30) Priorité: 22.11.2012 FR 1261134
(43) Date de publication de la demande: 30.09.2015
(73) Titulaire: Saint-Gobain PAM, 21 Avenue Camille Cavallier 54700 Pont-à-Mousson (FR)
(72) Inventeur: GENELOT, Pierre, F-54700 Norroy (FR); RENARD, Philippe, F-54710 Fleville Devant Nancy (FR); SCHMIDT, Christelle, F-54700 Pont A Mousson (FR)
(74) Mandataire: Lavoix
(86) Numéro de dépôt international: PCT/EP2013/074282
(87) Numéro de publication internationale: WO 2014/079882

(56) Documents cités:
- FR-A1- 2 907 877
- US-A- 5 335 946
- US-A- 5 921 588
- US-A1- 2005 006 855
- US-A1- 2009 060 635

## Description

La présente invention concerne un ensemble d'étanchéité pour jonction tubulaire entre un bout uni et un bout à emboîtement, le bout à emboîtement comportant une gorge intérieure formant une paroi de gorge, l'ensemble d'étanchéité comprenant :
- une garniture d'étanchéité définissant un axe longitudinal de la jonction tubulaire et destinée à être disposée dans la gorge intérieure autour du bout uni, et
- au moins un élément de verrouillage disposé sur la garniture d'étanchéité et adapté pour verrouiller le bout uni dans le bout à emboîtement, l'élément de verrouillage s'étendant autour de l'axe longitudinal sur une plage angulaire de verrouillage et comportant une face radialement extérieure, et une face radialement intérieure, la face intérieure comportant une pluralité de dents de verrouillage adaptées pour mordre dans le bout uni dans une position finale de verrouillage du bout uni dans le bout à emboîtement, la pluralité de dents de verrouillage comprenant au moins une dent d'amorce.

L'invention concerne aussi une jonction tubulaire munie d'un tel ensemble d'étanchéité.

L'invention s'applique notamment aux canalisations transportant de l'eau potable ou des eaux usées pour l'assainissement. Le bout à emboîtement est par exemple en fonte ductile. Les canalisations comportent des tuyaux présentant un diamètre typique supérieur ou égal à 60 mm et une longueur de quelques mètres, par exemple environ 6 mètres.

On connaît dans l'état de la technique de telles jonctions tubulaires. La garniture d'étanchéité, en général en matériau élastomère, a pour but d'éviter des fuites du fluide transporté vers l'extérieur lors de l'exploitation de la canalisation. Les éléments de verrouillage sont adaptés pour empêcher un déboîtement, notamment une séparation axiale entre le bout uni et le bout à emboîtement. Les éléments de verrouillage ne doivent cependant pas s'opposer de façon substantielle à l'assemblage, en général manuel, de ces éléments.

Pour empêcher un déboîtement, il est connu de munir les éléments de verrouillage de dents adaptées pour mordre dans le bout uni. Le document US-A-2009/0060635 divulgue un ensemble d'étanchéité comprenant un élément de verrouillage de ce type. L'élément de verrouillage comporte trois dents de verrouillage. Selon un mode particulier décrit au paragraphe [0053], l'une des dents de verrouillage est plus grande que les autres, sans qu'aucun effet technique particulier soit associé à cette caractéristique.

Il a été constaté que les ensembles d'étanchéité du type décrit ci-dessus ne permettent pas toujours un bon verrouillage du bout uni dans le bout à emboîtement, notamment lorsque le bout uni est en matière plastique, par exemple en PE, PVC ou PVC bi-orienté, et en particulier lorsque le jeu radial entre le bout uni et le bout à emboîtement est important. Le bout à emboîtement comporte en effet une surface intérieure d'entrée cylindrique qui s'étend entre son extrémité libre et la paroi de gorge. La surface d'entrée cylindrique forme avec la surface extérieure du bout uni un jeu radial dépendant des tolérances de fabrication du bout à emboîtement et du bout uni. Ainsi, en particulier lorsque ce jeu est élevé, c'est-à-dire lorsque le rayon de la surface intérieure d'entrée du bout à emboîtement est proche de la limite maximale de la tolérance et que le rayon de la surface extérieure du bout uni est proche de la limite minimale de la tolérance, les éléments de verrouillage ne remplissent alors pas correctement leur fonction de verrouillage.

Un but de l'invention est donc de proposer un ensemble d'étanchéité pour jonction tubulaire qui facilite le verrouillage du bout uni dans le bout à emboîtement, notamment dans les conditions particulières de matière et de jeu précitées.

A cet effet, l'invention a pour objet un ensemble d'étanchéité du type décrit ci-dessus, dans lequel la dent d'amorce s'étend autour de l'axe longitudinal sur une plage angulaire d'amorce inférieure à la plage angulaire de verrouillage.

Selon des modes particuliers de réalisation, l'ensemble d'étanchéité comprend l'une ou plusieurs des caractéristiques suivantes, prise(s) isolément ou selon toutes les combinaisons techniquement possibles :
- la dent d'amorce est plus proéminente radialement qu'au moins une des autres dents de verrouillage, la dent d'amorce étant destinée à mordre dans le bout uni dans une position initiale de verrouillage du bout uni par rapport au bout à emboîtement, dans laquelle la face intérieure est plus éloignée du bout uni que dans la position finale de verrouillage ;
- la dent d'amorce est située selon l'axe longitudinal entre deux des dents de verrouillage, lesdites deux dents de verrouillage étant adjacentes et de préférence les plus éloignées de la garniture d'étanchéité selon l'axe longitudinal ;
- la dent d'amorce occupe une portion sensiblement médiane de la plage angulaire de verrouillage ;
- la plage angulaire d'amorce représente entre 10% et 50% de la plage angulaire de verrouillage, de préférence un tiers de la plage angulaire de verrouillage ;
- la dent d'amorce présente radialement vers l'intérieur une partie pointue, de préférence rectiligne ;
- la dent d'amorce est saillante radialement vers l'intérieur par rapport à au moins une des, et de préférence toutes les, autres dents de verrouillage sur une hauteur radiale comprise entre 0,3 mm et 2 mm ;
- les dents de verrouillage, à l'exception de la dent d'amorce, définissent entre elles des sillons sur la face intérieure de l'élément de verrouillage, les sillons étant de préférence sensiblement parallèles entre eux ;
- les dents de verrouillage présentent chacune au moins une crête s'étendant sensiblement orthogonalement à l'axe longitudinal ;
- les dents de verrouillage forment des filets faisant, avec une direction circonférentielle orthogonale à l'axe longitudinal, un angle de filet non nul adapté pour un démontage du bout uni par dévissage du bout uni autour de l'axe longitudinal ;
- les dents de verrouillage présentent une section sensiblement triangulaire selon un plan longitudinal de la jonction tubulaire ;
- les dents de verrouillage sont orientées vers le côté opposé à l'extrémité libre du bout à emboîtement pour s'opposer à un déboîtement du bout uni selon l'axe longitudinal dans la position finale de verrouillage.

L'invention concerne aussi une jonction tubulaire comprenant un bout uni, un bout à emboîtement comportant une gorge intérieure formant une paroi de gorge, et un ensemble d'étanchéité, caractérisée en ce que :
- l'ensemble d'étanchéité est tel que décrit ci-dessus,
- la garniture d'étanchéité est disposée dans la gorge intérieure autour du bout uni, et
- la face radialement extérieure est dirigée vers la paroi de gorge.

Selon un mode particulier de réalisation, la jonction tubulaire comprend les caractéristiques suivantes : le bout à emboîtement est en métal, de préférence en fonte ductile, et le bout uni est en matière plastique, notamment en PE, PVC ou PVC bi-orienté.

L'invention sera mieux comprise à la lecture de la description qui va suivre, donnée uniquement à titre d'exemple et faite en se référant aux dessins annexés, sur lesquels :
- la Figure 1 est une vue partielle d'une section selon un plan longitudinal d'une jonction tubulaire selon un premier mode de réalisation de l'invention, l'élément de verrouillage étant dans la position initiale de verrouillage ;
- la Figure 2 est une vue partielle d'une section selon un plan longitudinal de la jonction tubulaire représentée sur la Figure 1, l'élément de verrouillage étant dans la position finale de verrouillage ;
- la Figure 3 est une vue en perspective de l'ensemble d'étanchéité de la jonction tubulaire représentée sur les Figures 1 et 2 ;
- la Figure 4 est une vue en perspective d'un des éléments de verrouillage de l'ensemble d'étanchéité représenté sur les Figures 1 à 3, l'élément de verrouillage présentant sa face intérieure ;
- la Figure 5 est une vue en perspective, selon un autre angle, de l'élément de verrouillage représenté sur la Figure 4 ;
- la Figure 6 est une vue analogue à la Figure 4 d'un élément de verrouillage représentant un second mode de réalisation de l'élément de verrouillage représenté sur les Figures 1 à 5 ; et
- la Figure 7 est une vue analogue à la Figure 5 d'un élément de verrouillage représentant une variante de l'élément de verrouillage représenté sur les Figures 1 à 6.

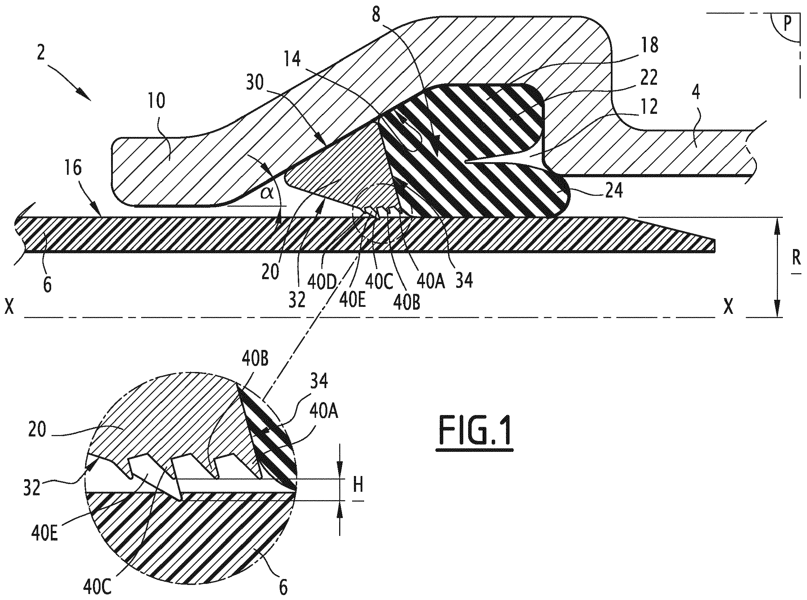

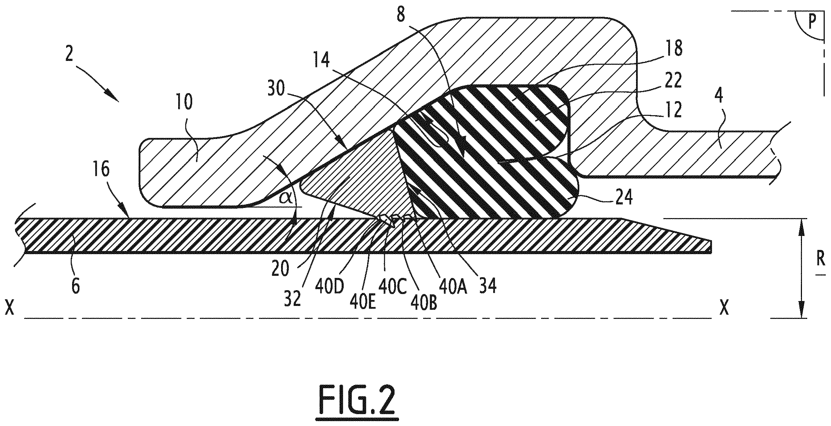

Comme visible sur les Figures 1 et 2, une jonction tubulaire 2 selon un premier mode de réalisation de l'invention comporte un premier élément de canalisation muni d'un bout à emboîtement 4, un second élément de canalisation muni d'un bout uni 6, et un ensemble d'étanchéité 8.

La jonction tubulaire 2 ou l'ensemble d'étanchéité 8 définit un axe longitudinal X-X. Dans ce qui suit, les expressions « axialement », « radialement » et « circonférentiellement » sont utilisées en référence à cet axe longitudinal X-X.

Le bout à emboîtement 4 est par exemple en fonte ductile. Le bout à emboîtement 4 est avantageusement revêtu d'une couche protectrice, par exemple anticorrosion, non représentée.

Le bout à emboîtement 4 comporte une extrémité libre 10 tournée vers le bout uni 6 à l'état non assemblé. Le bout à emboîtement 4 comporte en outre une gorge annulaire intérieure 12.

La gorge intérieure 12 forme une paroi de gorge 14 inclinée par rapport à l'axe longitudinal X-X.

La paroi de gorge 14 a une forme tronconique et se rétrécit vers l'extrémité libre 10 du bout à emboîtement 4. La paroi de gorge 14 forme un angle α avec l'axe longitudinal X-X, par exemple compris entre 10° et 55° environ.

Le bout uni 6 est en matière plastique, par exemple en PE, PVC ou PVC bi-orienté. Le bout uni 6 comporte une surface radialement extérieure 16 sensiblement cylindrique et définie par un rayon R autour de l'axe longitudinal X-X. Selon un mode particulier de réalisation, R est compris entre 60 et 200 mm, par exemple égal à 110 mm.

L'ensemble d'étanchéité 8, visible sur les Figures 1 à 3, comprend une garniture d'étanchéité 18 s'étendant circonférentiellement autour de l'axe longitudinal X-X, et des éléments de verrouillage 20 fixés sur la garniture d'étanchéité 18.

En référence aux Figures 1 et 2, l'ensemble d'étanchéité 8 est inséré dans la gorge intérieure 12 du bout à emboîtement 4. La garniture d'étanchéité 18 est disposée axialement du côté opposé à l'extrémité libre 10 du bout à emboîtement 4, tandis que les éléments de verrouillage 20 sont disposés axialement du côté de l'extrémité libre 10.

La garniture d'étanchéité 18 est par exemple en caoutchouc ou en matière élastomère. Elle comporte un corps de base 22 en contact avec le bout à emboîtement 4, et une lèvre d'étanchéité 24 en contact avec le bout uni 6 et orientée vers l'extrémité libre de celui-ci dans la position emboîtée.

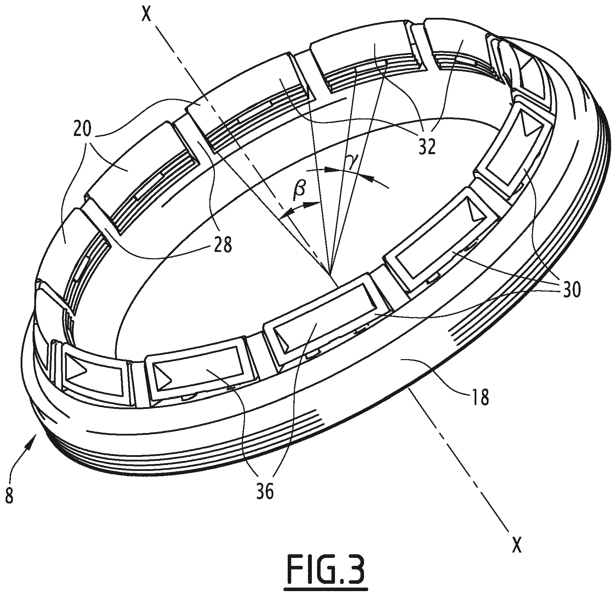

Le nombre d'éléments de verrouillage 20 est compris entre trois et vingt, avantageusement entre six et quinze. Dans le mode de réalisation représenté sur la Figure 3, douze éléments de verrouillage 20 sont répartis autour de l'axe longitudinal X-X.

Chaque élément de verrouillage 20 est séparé des éléments de verrouillage 20 voisins autour de l'axe longitudinal X-X par une plage angulaire de séparation 28 comprise entre 2° et 5°, par exemple environ 3°. Chaque élément de verrouillage 20 s'étend autour de l'axe longitudinal X-X selon une plage angulaire de verrouillage β comprise entre 15° et 60°, de préférence entre 20 ° et 36°.

La plage angulaire de verrouillage β est délimitée par les faces circonférentielles d'extrémité de l'élément de verrouillage 20.

Chaque élément de verrouillage 20 est par exemple fabriqué dans une matière ayant une dureté supérieure à celle du bout uni 6, par exemple de l'acier.

En se référant aux Figures 1 et 2, la section génératrice de l'élément de verrouillage 20 est sensiblement triangulaire.

Chaque élément de verrouillage 20 comprend une face radialement extérieure 30 tronconique qui converge vers l'extrémité libre 10 du bout à emboîtement 4. Chaque élément de verrouillage 20 comprend une face radialement intérieure 32 et une face de liaison 34 tournée vers le corps de base 22 de la garniture d'étanchéité 18.

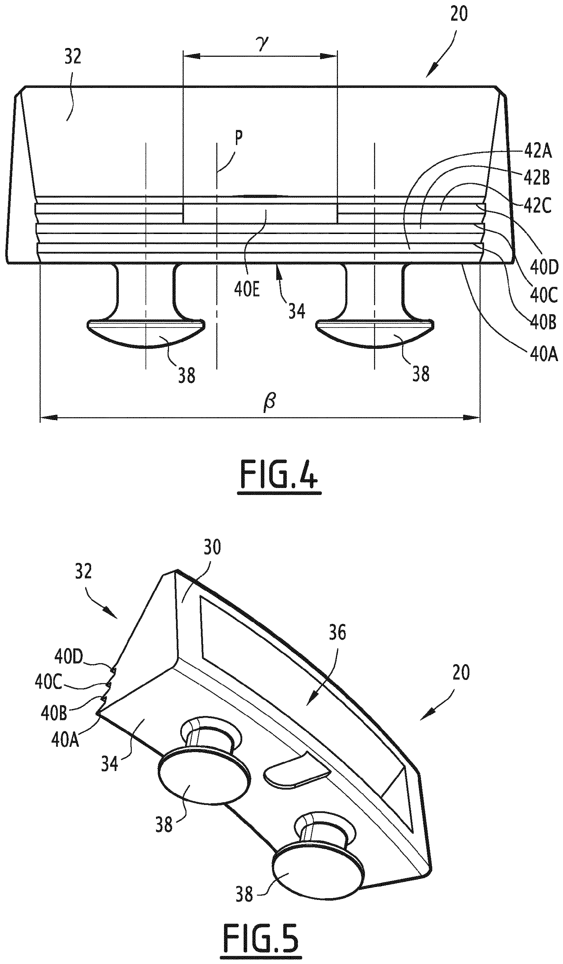

En référence aux Figures 3 et 5, chaque élément de verrouillage 20 est évidé à partir de sa face extérieure 30 afin de réduire sa masse. Ceci définit un évidement 36 dans chaque élément de verrouillage 20.

Chaque face de liaison 34 s'étend, à l'état non sollicité de la garniture 8, sensiblement radialement. Chaque face de liaison 34 comprend des tétons 38 de fixation de l'élément de verrouillage 20 sur la garniture d'étanchéité 18.

Les tétons 18 sont par exemple au nombre de deux par élément de verrouillage 20.

La face intérieure 32 de chaque élément de verrouillage 20 comprend une pluralité de dents de verrouillage 40A, 40B, 40C, 40D, 40E (Figures 1, 2, 4 et 5) destinées à mordre dans le bout uni 6 dans une position finale de verrouillage de l'élément de verrouillage 20 représentée sur la Figure 2.

Les dents de verrouillage 40A, 40B, 40C, 40D s'étendent avantageusement autour de l'axe longitudinal X-X sur toute la plage angulaire de verrouillage β. Les dents 40A, 40B, 40C, 40D comportent chacune au moins une crête, qui est sensiblement orthogonale à l'axe longitudinal X-X ou située dans un plan perpendiculaire par rapport à l'axe longitudinal X-X. Les crêtes ont par exemple une forme d'arc. Les dents 40A, 40B, 40C, 40D définissent entre elles des sillons 42A, 42B, 42C (Figure 4). Les dents 40A, 40B, 40C, 40D sont indexées sur les Figures par les lettres A à D, par ordre croissant d'éloignement de la face de liaison 34.

Les dents de verrouillage 40A, 40B, 40C, 40D, 40E possèdent une section selon un plan longitudinal P (Figures 1, 2 et 4) de la jonction tubulaire 2 qui est sensiblement triangulaire. Les dents 40A, 40B, 40C, 40D, 40E sont avantageusement orientées selon l'axe longitudinal X-X du côté opposé à l'extrémité libre 10 du bout à emboîtement 4, de manière à s'opposer à un déboîtement axial du bout uni 6 dans la position finale de verrouillage (Figure 2). Les dents de verrouillage 40A, 40B, 40C, 40D, 40E font saillie à partir de la surface intérieure 32 dans une direction sensiblement perpendiculaire à la surface extérieure 30.

Le nombre de dents de verrouillage 40A, 40B, 40C, 40D, 40E de chaque élément de verrouillage 20 est par exemple compris entre trois et dix, et est de préférence de cinq.

La dent de verrouillage 40E est plus proéminente radialement que les autres dents de verrouillage 40A, 40B, 40C, 40D. La dent 40E forme une dent d'amorce. La dent d'amorce 40E est au contact du bout uni 6 dans une position initiale de verrouillage représentée sur la Figure 1. Dans cette position initiale de verrouillage, les autres dents de verrouillage sont hors contact du bout uni 6. Dans la position initiale de verrouillage (Figure 1), la face intérieure 32 est plus éloignée du bout uni 6 que dans la position finale de verrouillage (Figure 2).

La dent d'amorce 40E comporte une crête faisant saillie radialement vers l'intérieur. La crête de la dent d'amorce 40E dépasse radialement la crête d'au moins une des, de préférence de toutes les, autres dents de verrouillage 40A, 40B, 40C, 40D d'une hauteur radiale H (Figure 1) comprise entre 0,3 et 2 mm.

La partie la plus pointue de la dent d'amorce 40E formant la crête de la dent est de préférence rectiligne. Les autres dents de verrouillage 40A, 40B, 40C, 40D ont une crête en forme d'arc, leur partie la plus pointue ayant de préférence un rayon de courbure qui est identique au rayon de courbure du bout uni. De préférence, l'élément de verrouillage 20 est fabriqué par moulage. Dans ce cas, chaque rayon de courbure est obtenu par moulage.

La dent d'amorce 40E est par exemple située entre les dents de verrouillage adjacentes 40C et 40D, les plus éloignées de la face de liaison 34.

Comme visible sur les Figures 3 et 4, la dent d'amorce 40E s'étend autour de l'axe longitudinal X-X sur une plage angulaire d'amorce γ située au milieu de la plage angulaire de verrouillage β. La valeur en degrés de la plage angulaire d'amorce γ est avantageusement comprise entre 10% et 50% de la valeur en degrés de la plage angulaire de verrouillage β, et vaut par exemple environ un tiers de la valeur en degrés de la plage angulaire de verrouillage β.

Le montage de la jonction tubulaire 2 s'effectue de la manière suivante.

L'ensemble d'étanchéité 8, manipulable d'un seul bloc, est disposé, par exemple à la main, dans la gorge intérieure 18.

Lors de l'insertion du bout uni 6 dans le bout à emboîtement 4, le bout uni 6 vient comprimer la lèvre 24 de la garniture d'étanchéité 18. La face extérieure 30 de chaque élément de verrouillage 20 s'applique contre la paroi de gorge 14 du bout à emboîtement 4. Chaque dent d'amorce 40E vient au contact du bout uni 6.

Lors de la mise en pression de la jonction tubulaire 2, le bout uni 6 tend à se déboîter légèrement par rapport au bout à emboîtement 4.

Dans un premier temps, grâce aux caractéristiques décrites ci-dessus, l'effort exercé par les éléments de verrouillage 20 sur le bout uni 6 se concentre alors d'abord sur les dents d'amorce 40E. Comme ces dernières présentent une plage angulaire d'amorce γ inférieure à la plage angulaire de verrouillage β, l'effort exercé par chaque élément de verrouillage 20 sur le bout uni 6 s'exerce sur une surface réduite du bout uni 6. L'effort exercé atteint localement des valeurs importantes, favorisant ainsi la pénétration des dents d'amorce 40E dans le bout uni 6 sans risque de glissement sur la surface extérieure 16 de celui-ci. Les éléments de verrouillage 20 sont alors dans la position initiale de verrouillage de la Figure 1. Dans cette position, les autres dents de verrouillage 40A, 40B, 40C, 40D ne sont pas encore au contact du bout uni 6.

Ensuite, dans un second temps, par glissement des éléments de verrouillage radialement vers l'intérieur en prenant appui par leur face extérieure 30 contre la paroi tronconique 14, la face intérieure 32 de chaque élément de verrouillage 20 se rapproche du bout uni 6 et les autres dents de verrouillage 40A, 40B, 40C, 40D viennent à leur tour au contact du bout uni 6 et s'y enfoncent. Les éléments de verrouillage 20 se trouvent alors dans la position finale de verrouillage de la Figure 2, dans laquelle les dents de verrouillage 40A, 40B, 40C, 40D, 40E sont enfoncées dans le bout uni 6, assurant ainsi un verrouillage optimal de la jonction tubulaire 2.

Les dents d'amorce 40E selon l'invention améliorent le verrouillage du bout uni 6 dans le bout à emboîtement 4, notamment lorsque le bout uni 6 est en matière plastique, par exemple en PE, PVC ou PVC bi-orienté, et que le jeu radial entre le bout uni 6 et le bout à emboîtement 4 est élevé et proche du jeu maximal.

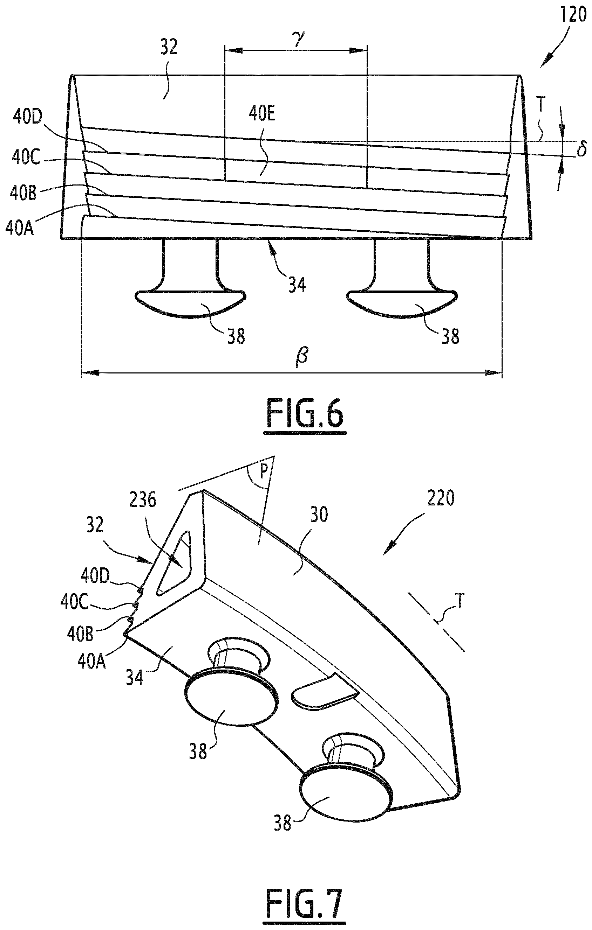

Sur la Figure 6 est représenté un élément de verrouillage 120 d'une jonction tubulaire selon un second mode de réalisation. Celui-ci diffère du premier mode de réalisation par la configuration des éléments de verrouillage. Les parties semblables portent les mêmes références et ne seront pas décrites à nouveau.

L'élément de verrouillage 120 diffère de l'élément de verrouillage 20 des Figures 1 à 5 par le fait que les dents de verrouillage 40A, 40B, 40C, 40D, 40E forment des filets faisant un angle de filet δ non nul avec une direction circonférentielle T s'étendant dans un plan orthogonal à l'axe longitudinal X-X. L'angle de filet δ est par exemple compris entre 3° et 10°.

Le fonctionnement et les avantages de l'élément de verrouillage 120 sont analogues à ceux de l'élément de verrouillage 20. L'élément de verrouillage 120 autorise en outre un démontage aisé de la jonction tubulaire, en dévissant le bout uni 6 dans le bout à emboîtement 4. Ceci évite l'utilisation éventuelle de cales (non représentées) qui sont insérées entre les éléments de verrouillage 20 et le bout uni 6 pour démonter la jonction tubulaire 2 dans le premier mode de réalisation.

Sur la Figure 7 est représenté un élément de verrouillage 220 constituant une variante des éléments de verrouillage 20 et 120 des modes de réalisation précédents. L'élément de verrouillage 220 ne comporte pas d'évidement à partir de la surface extérieure 30. L'élément de verrouillage 220 comporte un évidement 236 s'étendant de part en part de l'élément de verrouillage 220 selon la direction circonférentielle T, c'est-à-dire parallèlement aux faces 30, 32, 34. L'évidement 236 débouche à ses deux extrémités. L'évidement 236 présente par exemple une section sensiblement triangulaire selon le plan longitudinal P de la section tubulaire.

L'évidement 236 permet d'alléger l'élément de verrouillage 220 par rapport à un élément de verrouillage non évidé.

En variante non représentée, l'élément de verrouillage comporte deux évidements borgnes, chaque évidement étant ménagé dans une face circonférentielle d'extrémité de l'élément de verrouillage.

L'étanchéité est obtenue automatiquement lors de l'insertion du bout uni 6 dans le bout à emboîtement 4, par compression radiale de la garniture d'étanchéité 8 entre le bout uni et le bout à emboîtement.

## Revendications

1. Ensemble d'étanchéité (8) pour jonction tubulaire (2) entre un bout uni (6) et un bout à emboîtement (4), le bout à emboîtement (4) comportant une gorge intérieure (12) formant une paroi de gorge (14), l'ensemble d'étanchéité (8) comprenant :
- une garniture d'étanchéité (18) définissant un axe longitudinal (X-X) de la jonction tubulaire (2) et destinée à être disposée dans la gorge intérieure (12) autour du bout uni (6), et
- au moins un élément de verrouillage (20) disposé sur la garniture d'étanchéité (18) et adapté pour verrouiller le bout uni (6) dans le bout à emboîtement (4), l'élément de verrouillage (20) s'étendant autour de l'axe longitudinal (X-X) sur une plage angulaire de verrouillage (β) et comportant une face radialement extérieure (30), et une face radialement intérieure (32), la face intérieure (32) comportant une pluralité de dents de verrouillage (40A, 40B, 40C, 40D, 40E) adaptées pour mordre dans le bout uni (6) dans une position finale de verrouillage du bout uni (6) dans le bout à emboîtement (4), la pluralité de dents de verrouillage (40A, 40B, 40C, 40D, 40E) comprenant au moins une dent d'amorce (40E),
**caractérisé en ce que** la dent d'amorce (40E) s'étend autour de l'axe longitudinal (X-X) sur une plage angulaire d'amorce (γ) inférieure à la plage angulaire de verrouillage (β), et **en ce que** la dent d'amorce (40E) est plus proéminente radialement qu'au moins une (40A, 40B, 40C, 40D) des autres dents de verrouillage, la dent d'amorce (40E) étant destinée à mordre dans le bout uni (6) dans une position initiale de verrouillage du bout uni (6) par rapport au bout à emboîtement (4), dans laquelle la face intérieure (32) est plus éloignée du bout uni (6) que dans la position finale de verrouillage.

2. Ensemble d'étanchéité (8) selon la revendication 1, **caractérisé en ce que** la dent d'amorce (40E) est située selon l'axe longitudinal (X-X) entre deux (40C, 40D) des dents de verrouillage, lesdites deux dents de verrouillage (40C, 40D) étant adjacentes et de préférence les plus éloignées de la garniture d'étanchéité (18) selon l'axe longitudinal (X-X).

3. Ensemble d'étanchéité (8) selon la revendication 1 ou 2, **caractérisé en ce que** la dent d'amorce (40E) occupe une portion sensiblement médiane de la plage angulaire de verrouillage (β).

4. Ensemble d'étanchéité (8) selon l'une quelconque des revendications 1 à 3, **caractérisé en ce que** la plage angulaire d'amorce (γ) représente entre 10% et 50% de la plage angulaire de verrouillage (β), de préférence un tiers de la plage angulaire de verrouillage (β).

5. Ensemble d'étanchéité (8) selon l'une quelconque des revendications 1 à 4, **caractérisé en ce que** la dent d'amorce (40E) présente radialement vers l'intérieur une partie pointue, de préférence rectiligne.

6. Ensemble d'étanchéité (8) selon l'une quelconque des revendications 1 à 5, **caractérisé en ce que** la dent d'amorce (40E) est saillante radialement vers l'intérieur par rapport à au moins une des, et de préférence toutes les, autres dents de verrouillage (40A, 40B, 40C, 40D) sur une hauteur radiale (H) comprise entre 0,3 mm et 2 mm.

7. Ensemble d'étanchéité (8) selon l'une quelconque des revendications 1 à 6, **caractérisé en ce que** les dents de verrouillage (40A, 40B, 40C, 40D), à l'exception de la dent d'amorce (40E), définissent entre elles des sillons (42A, 42B, 42C) sur la face intérieure (32) de l'élément de verrouillage (20), les sillons (42A, 42B, 42C) étant de préférence sensiblement parallèles entre eux.

8. Ensemble d'étanchéité (8) selon l'une quelconque des revendications 1 à 7, **caractérisé en ce que** les dents de verrouillage (40A, 40B, 40C, 40D, 40E) présentent chacune au moins une crête s'étendant sensiblement orthogonalement à l'axe longitudinal (X-X).

9. Ensemble d'étanchéité (8) selon l'une quelconque des revendications 1 à 8, **caractérisé en ce que** les dents de verrouillage (40A, 40B, 40C, 40D, 40E) forment des filets faisant, avec une direction circonférentielle (T) orthogonale à l'axe longitudinal (X-X), un angle de filet (δ) non nul adapté pour un démontage du bout uni (6) par dévissage du bout uni autour de l'axe longitudinal (X-X).

10. Jonction tubulaire (2) comprenant un bout uni (6), un bout à emboîtement (4) comportant une gorge intérieure (12) formant une paroi de gorge (14), et un ensemble d'étanchéité (8), **caractérisée en ce que** :
- l'ensemble d'étanchéité (8) est tel que décrit par l'une quelconque des revendications précédentes,
- la garniture d'étanchéité (18) est disposée dans la gorge intérieure (12) autour du bout uni (6), et
- la face radialement extérieure (30) est dirigée vers la paroi de gorge (14).

11. Jonction tubulaire (2) selon la revendication 10, **caractérisée en ce que** le bout à emboîtement (4) est en métal, de préférence en fonte ductile, et le bout uni (6) est en matière plastique, notamment en PE, PVC ou PVC bi-orienté.

## Patentansprüche

1. Dichtungsanordnung (8) für eine Rohrverbindung (2) zwischen einem glatten Ende (6) und einem Muffen-Ende (4), wobei das Muffen-Ende (4) eine innere Auskehlung (12) aufweist, die eine Auskehlungswand (14) ausbildet, wobei die Dichtungsanordnung (8) aufweist:
- eine Dichtung (18), die eine Längsachse (X-X) der Rohrverbindung (2) definiert und vorgesehen ist, um in der inneren Auskehlung (12) um das glatte Ende (6) herum angeordnet zu sein, und
- mindestens ein Verriegelungselement (20), das auf der Dichtung (18) angeordnet ist und angepasst ist, um das glatte Ende (6) in dem Muffen-Ende (4) zu verriegeln, wobei sich das Verriegelungselement (20) über einen Verriegelungswinkelbereich (β) um die Längsachse (X-X) erstreckt und eine radial äußere Seite (30) und eine radial innere Seite (32) aufweist, wobei die innere Seite (32) eine Mehrzahl von Verriegelungszähnen (40A, 40B, 40C, 40D, 40E) aufweist, die angepasst sind, um in einer Endverriegelungsposition des glatten Endes (6) in dem Muffen-Ende (4) in das glatte Ende (6) einzugreifen, wobei die Mehrzahl von Verriegelungszähnen (40A, 40B, 40C, 40D, 40E) mindestens einen Anfangszahn (40E) aufweist,
**dadurch gekennzeichnet, dass** sich der Anfangszahn (40E) um die Längsachse (X-X) herum über einen Anfangswinkelbereich (γ) erstreckt, der kleiner als der Verriegelungswinkelbereich (β) ist, und dass der Anfangszahn (40E) radial mehr hervorsteht als mindestens einer (40A, 40B, 40C, 40D) der anderen Verriegelungszähne, wobei der Anfangszahn (40E) vorgesehen ist, um in einer Anfangsverriegelungsposition des glatten Endes (6) bezüglich des Muffen-Endes (4), in der die innere Seite (32) weiter von dem glatten Ende (6) entfernt ist als in der Endverriegelungsposition, in das glatte Ende (6) einzugreifen.

2. Dichtungsanordnung (8) gemäß Anspruch 1, **dadurch gekennzeichnet, dass** der Anfangszahn (40E) entlang der Längsachse (X-X) zwischen zwei (40C, 40D) der Verriegelungszähne positioniert ist, wobei die beiden Verriegelungszähne (40C, 40D) benachbart sind und vorzugsweise die entlang der Längsachse (X-X) am weitesten von der Dichtung (18) entfernten sind.

3. Dichtungsanordnung (8) gemäß Anspruch 1 oder 2, **dadurch gekennzeichnet, dass** der Anfangszahn (40E) einen im Wesentlichen medianen Abschnitt des Verriegelungswinkelbereichs (β) besetzt.

4. Dichtungsanordnung (8) gemäß irgendeinem der Ansprüche 1 bis 3, **dadurch gekennzeichnet, dass** der Anfangswinkelbereich (γ) zwischen 10% und 50% des Verriegelungswinkelbereichs (β), vorzugsweise ein Drittel des Verriegelungswinkelbereichs (β) repräsentiert.

5. Dichtungsanordnung (8) gemäß irgendeinem der Ansprüche 1 bis 4, **dadurch gekennzeichnet, dass** der Anfangszahn (40E) radial nach innen einen spitzen, vorzugsweise geradlinigen Teil aufweist.

6. Dichtungsanordnung (8) gemäß irgendeinem der Ansprüche 1 bis 5, **dadurch gekennzeichnet, dass** der Anfangszahn (40E) bezüglich mindestens eines der und vorzugsweise aller anderen Verriegelungszähne (40A, 40B, 40C, 40D) auf einer radialen Höhe (H), die zwischen 0,3 mm und 2 mm beträgt, radial nach innen hervorsteht.

7. Dichtungsanordnung (8) gemäß irgendeinem der Ansprüche 1 bis 6, **dadurch gekennzeichnet, dass** die Verriegelungszähne (40A, 40B, 40C, 40D) mit Ausnahme des Anfangszahns (40E) zwischen einander auf der inneren Seite (32) des Verriegelungselements (20) Rillen (42A, 42B, 42C) definieren, wobei die Rillen (42A, 42B, 42C) vorzugsweise im Wesentlichen parallel zueinander sind.

8. Dichtungsanordnung (8) gemäß irgendeinem der Ansprüche 1 bis 7, **dadurch gekennzeichnet, dass** die Verriegelungszähne (40A, 40B, 40C, 40D, 40E) jeweils mindestens einen Grat aufweisen, der sich im Wesentlichen orthogonal zu der Längsachse (X-X) erstreckt.

9. Dichtungsanordnung (8) gemäß irgendeinem der Ansprüche 1 bis 8, **dadurch gekennzeichnet, dass** die Verriegelungszähne (40A, 40B, 40C, 40D, 40E) Gewindegänge ausbilden, die mit einer zu der Längsachse (X-X) orthogonalen Umfangsrichtung (T) einen Gewindegangwinkel (δ) von nicht Null ausbilden, der für ein Abmontieren des glatten Endes (6) durch Abschrauben des glatten Endes um die Längsachse (X-X) angepasst ist.

10. Rohrverbindung (2), aufweisend ein glattes Ende (6), ein Muffen-Ende (4), das eine innere Auskehlung (12) aufweist, die eine Auskehlungswand (14) ausbildet, und eine Dichtungsanordnung (8), **dadurch gekennzeichnet, dass**:
- die Dichtungsanordnung (8) wie durch irgendeinen der vorhergehenden Ansprüche beschrieben ist,
- die Dichtung (18) in der inneren Auskehlung (12) um das glatte Ende (6) herum angeordnet ist, und
- die radial äußere Seite (30) in Richtung zu der Auskehlungswand (14) hin gerichtet ist.

11. Rohrverbindung (2) gemäß Anspruch 10, **dadurch gekennzeichnet, dass** das Muffen-Ende (4) aus Metall, vorzugsweise aus duktilem Gusseisen ist, und das glatte Ende (6) aus Kunststoff, insbesondere aus PE, PVC oder biorientiertem PVC ist.

## Claims

1. A sealing assembly (8) for a tubular joint (2) between a plain end (6) and a fitting end (4), the fitting end (4) comprising an inner groove (12) forming a groove wall (14), the sealing assembly (8) comprising:
- a sealing gasket (18) defining a longitudinal axis (X-X) of the tubular joint (2) and designed to be positioned in the inner groove (12) around the plain end (6), and
- at least one locking element (20) positioned on the sealing gasket (18) and suitable for locking the plain end (6) in the fitting end (4), the locking element (20) extending around the longitudinal axis (X-X) over an angular locking range (β) and comprising a radially outer face (30), and a radially inner face (32), the inner face (32) comprising a plurality of locking teeth (40A, 40B, 40C, 40D, 40E) suitable for biting into the plain end (6) in a final locking position of the plain end (6) in the fitting end (4), the plurality of locking teeth (40A, 40B, 40C, 40D, 40E) comprising at least one leading tooth (40E),
**characterized in that** the leading tooth (40E) extends around the longitudinal axis (X-X) over an angular leading range (γ) smaller than the angular locking range (β), and **in that** the leading tooth (40E) projects radially more than at least one (40A, 40B, 40C, 40D) of the other locking teeth, the leading tooth (40E) being designed to bite into the plain end (6) in an initial locking position of the plain end (6) relative to the fitting end (4), in which the inner face (32) is further from the plain end (6) than in the final locking position.

2. The sealing assembly (8) according to claim 1, **characterized in that** the leading tooth (40E) is situated along the longitudinal axis (X-X) between two (40C, 40D) of the locking teeth, said two locking teeth (40C, 40D) being adjacent to and preferably the furthest ones from the sealing gasket (18) along the longitudinal axis (X-X).

3. The sealing assembly (8) according to claim 1 or 2, **characterized in that** the leading tooth (40E) occupies a substantially median portion of the angular locking range (β).

4. The sealing assembly (8) according to any one of claims 1 to 3, **characterized in that** the angular leading range (γ) represents between 10% and 50% of the angular locking range (β), preferably one third of the angular locking range (β).

5. The sealing assembly (8) according to any one of claims 1 to 4, **characterized in that** the leading tooth (40E) radially inwardly has a pointed part, preferably rectilinear.

6. The sealing assembly (8) according to any one of claims 1 to 5, **characterized in that** the leading tooth (40E) protrudes radially inward relative to at least one, preferably all, of the other locking teeth (40A, 40B, 40C, 40D) over a radial height (H) comprised between 0.3 mm and 2 mm.

7. The locking assembly (8) according to any one of claims 1 to 6, **characterized in that** the locking teeth (40A, 40B, 40C, 40D), with the exception of the leading tooth (40E), define furrows (42A, 42B, 42C) between them on the inner face (32) of the locking element (20), the furrows (42A, 42B, 42C) preferably being substantially parallel to one another.

8. The sealing assembly (8) according to any one of claims 1 to 7, **characterized in that** the locking teeth (40A, 40B, 40C, 40D, 40E) each have at least one ridge extending substantially orthogonally to the longitudinal axis (X-X).

9. The sealing assembly (8) according to any one of claims 1 to 8, **characterized in that** the locking teeth (40A, 40B, 40C, 40D, 40E) form threads forming a non-zero thread angle (δ) with a circumferential direction (T) orthogonal to the longitudinal axis (X-X), the thread angle (δ) being suitable for disassembling the plain end (6) by unscrewing the plain end around the longitudinal axis (X-X).

10. A tubular joint (2) comprising a plain end (6), a fitting end (4) comprising an inner groove (12) forming a groove wall (14), and a sealing assembly (8), **characterized in that**:
- the sealing assembly (8) is as described by any one of the preceding claims,
- the sealing gasket (18) is positioned in the inner groove (12) around the plain end (6), and
- the radially outer face (30) is oriented toward the groove wall (14).

11. The tubular joint (2) according to claim 10, **characterized in that** the fitting end (4) is made from metal, preferably ductile cast iron, and the plain end (6) is made from plastic, in particular PE, PVC or bi-oriented PVC.
